# FASCICULE DE BREVET EUROPEEN

(11) **EP 0 667 207 B1**
(45) Date de publication et mention de la délivrance du brevet: **25.03.1998**
(21) Numéro de dépôt: 95400254.9
(22) Date de dépôt: 08.02.1995
(51) Int. Cl.: B23K 20/02, B04B 7/08, B29C 43/18

(54) **Procédé d'obtention d'une pièce circulaire métallique renforcée par des fibres**
Verfahren zur Herstellung eines kreisförmigen faserverstärkten metallischen Teils
Procedure for the preparation of a circular fibre reinforced metallic piece

(30) Priorité: 10.02.1994 FR 9401490
(43) Date de publication de la demande: 16.08.1995
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Allassoeur, Philippe Louis André, F-78400 Chatou (FR); Collot, André Claude Félix, F-91540 Mennecy (FR); Guyonnet, Xavier Jean Michel André, F-77310 St. Fargeau Ponthierry (FR); Klein, Gilles Charles Casimir, F-95540 Mery/Oise (FR); Molliex, Ludovic Edmond Camille, F-75013 Paris (FR)

(56) Documents cités:
- EP-A- 0 490 629
- FR-A- 2 607 071
- GB-A- 2 247 492
- US-A- 4 781 669
- US-A- 5 184 769

## Description

L'invention se rapporte à un procédé comportant une opération de formage superplastique et permettant d'obtenir des pièces circulaires métalliques évidées en leur centre et renforcées par des fibres dans le voisinage de cet évidement. Les pièces circulaires ainsi obtenues sont notamment utilisées pour réaliser des rotors à haut rapport résistance/masse tels que les rotors de turbomachine utilisés en aéronautique.

### ETAT DE LA TECHNIQUE

Les rotors de turbomachine ont une forme générale de révolution autour d'un axe de rotation et ils comportent à leur périphérie ou latéralement une pluralité d'aubes faisant office de compresseur ou de turbine. Ces rotors tournent généralement à une vitesse élevée et sont soumis à des sollicitations importantes provenant principalement de la force centrifuge, mais aussi des vibrations de la machine et de l'ingestion accidentelle de corps étranger.

La conception de ces rotors est un compromis entre la performance aérodynamique ou hydrodynamique, la résistance et la masse.

Afin d'améliorer le rapport résistance/masse, on est conduit à renforcer ces rotors par des anneaux ou bandages réalisés dans des matériaux plus résistants et présentant un module d'élasticité appelé aussi module de Young supérieur.

On connait des anneaux de renfort pour rotor ayant une structure fibreuse et plus particulièrement des fibres en carbure de silicium, en carbure de bore ou autre matériau à haute résistance, ces fibres étant noyées dans une matrice métallique. Le brevet FR 2 607 071 en donne un exemple de réalisation. Dans ce brevet, des fibres de carbure de silicium (Sic) sont assemblées en un ruban hélicoïdal ou préforme, entre les spires duquel on intercale un autre ruban réalisé dans le matériau de la matrice. L'ensemble est pressé à haute température, les forces de pression diffusent le matériau de la matrice entre les fibres, ce qui assure la cohésion de l'ensemble.

Dans une autre forme de réalisation, telle que celle décrite dans le brevet EP 0 490 629 les préformes sont constituées chacune d'une seule fibre enroulée suivant une spirale plane. Ce procédé permet une remarquable régularité du rayon de courbure de la fibre, pour une meilleure résistance de l'anneau.

Il faut cependant remarquer que ces techniques imposent un pressage suivant une direction axiale qui tend à faire onduler les fibres et à réduire ainsi leur aptitude à résister à l'effort centrifuge.

FR-A-2 666 262 qui représente l'état de la technique le plus proche décrit un procédé d'obtention d'une pièce circulaire métallique renforcée par des fibres, ladite pièce étant évidée en son centre et lesdites fibres étant disposées dans le voisinage de l'évidement, ledit procédé comportant les opérations suivantes:
- réalisation d'une ébauche circulaire comportant une rainure circulaire en U dont l'ouverture est tournée du côté de l'axe géométrique de la pièce,
- compression des fibres avec un métal d'apport par forgeage superplastique,
- soudage à l'ébauche de la masse de fibres et de métal d'apport et
- usinage de la pièce.

Dans ce brevet FR 2 666 262, un ruban composite de fibres et matrice métallique est enroulé en spirale à l'intérieur d'un anneau métallique et soudé à lui par une pression isostatique ou radiale à chaud réalisée en autoclave ou à l'aide d'un mandrin à expansion thermique.

Cette solution présente l'avantage de bien tendre les fibres de renfort, ce qui leur évite toute ondulation et améliore leur capacité à résister à l'effort centrifuge.

Tous ces procédés ont cependant l'inconvénient d'imposer aux fibres de renfort deux cycles thermiques : compression des fibres avec le métal de la matrice pour obtenir les couches composites, ensuite soudage par diffusion des couches composites, ce qui augmente la dégradation des fibres. Par exemple le carbure de silicium SiC souvent utilisé pour réaliser des fibres de renfort peut réagir à haute température avec le métal de la matrice. Pour réduire ce phénomène, les fibres peuvent être recouvertes d'une couche de carbone, mais cette couche diffuse elle-même dans le métal de la matrice et en modifie la structure métallurgique. La réaction de la matière de la fibre avec la matrice n'est en conséquence que retardée.

### RESUME DE L'INVENTION

Pour résoude ce problème, l'invention propose un procédé d'obtention dans lequel les fibres de renfort et le métal d'apport constituant la matrice sont comprimés entre eux et soudés à la pièce circulaire à renforcer en une seule opération, ceci par l'exercice d'une compression radiale centrifuge à la température de forgeage superplastique du métal d'apport qui constituera ainsi la matrice métallique.

Plus précisément, ce procédé comporte les opérations principales suivantes :
1. Réalisation d'une ébauche circulaire évidée en son centre et comportant une rainure en U dont l'ouverture est tournée vers l'axe de la pièce et débouchant dans l'évidement central.
2. Disposition dans cette rainure alternativement de couches concentriques de fibres et de métal d'apport non comprimés, ainsi que d'une surépaisseur sans fibres de métal d'apport dans la partie la plus centrale.
3. Disposition aussi dans cette rainure d'une virole en un matériau plus rigide, coulissant entre les parois latérales de la rainure.
4. Recouvrement de la rainure par un obturateur métallique susceptible de se déformer à la façon d'une membrane sous l'action de la température et de la pression.
5. Mise sous vide de la rainure et soudage de l'obturateur à l'ébauche, de préférence par faisceau d'électrons, pour réaliser une fermeture hermétique.
6. Compression et soudage à l'ébauche en autoclave aux conditions de température et de pression de forgeage superplastique du métal d'apport, la pression de l'autoclave étant toutefois majorée pour tenir compte de la raideur de la virole.
7. Enlèvement de la virole et usinage de la pièce.

L'ébauche a des parois latérales et une paroi périphérique épaisse et rigide. L'obturateur au contraire est mince avec un rapport épaisseur de l'obturateur/largeur de la rainure et un rapport épaisseur de l'obturateur/épaisseur des parois de l'ébauche réduits. La virole est réalisée en un matériau conservant une rigidité juste suffisante.

Ainsi, pendant le chauffage et la compression, l'obturateur se déforme à la façon d'une membrane, pénètre dans la rainure et pousse la virole qui subit une expansion radiale et qui coulisse ente les parois latérales de la rainure. La virole presse ainsi entre sa surface extérieure et le fond de la rainure les différentes couches de fibres et de métal d'apport, assurant ainsi la diffusion du métal d'apport entre les fibres et son soudage à l'ébauche par diffusion.

Avant d'être introduites dans la rainure, les couches de fibres et de métal d'apport seront avantageusement conditionnées en préformes découpées à la longueur dans un ruban comportant un support de métal d'apport sur une face duquel on a appliqué un tissu de fibres de renfort. On coupera dans ce ruban chaque préforme à la longueur de la circonférence du cercle qu'elles feront chacune dans la rainure. On disposera ensuite ces préformes dans la rainure en décalant d'une préforme à l'autre la ligne de coupure pour que ces coupures soient uniformément réparties dans la rainure.

Dans un mode de réalisation préféré, la largeur du tissu de fibres est inférieure à celle du support, le fil de trame déborde du tissu et se trouve pris entre le support et deux rubans de métal d'apport soudés par résistance sur le support. Ce mode de réalisation peu onéreux permet aussi de réaliser des préformes ne comportant que du métal et de la fibre à l'exclusion de tout liant organique qu'il faudrait ensuite éliminer.

L'avantage de l'invention est de n'imposer qu'un seul cycle thermique aux fibres en contact avec le métal de la matrice, contrairement aux brevets cités. Ceci réduit la dégradation desdites fibres.

Un autre avantage de l'invention est que la compression est radiale et centrifuge, ce qui évite les ondulations des fibres susceptibles d'apparaitre dans le cas d'une pression axiale. La résistance des fibres est améliorée car ces fibres prennent la forme d'un cercle parfait.

Le problème était de pouvoir exercer ce pressage radial et centrifuge malgré la réduction importante du volume total de fibres et de métal d'apport pendant la compression, et de rendre cette compression uniforme. Ceci est obtenu en autoclave avec un obturateur se déformant à la façon d'une membrane et poussant une virole plus rigide à expansion radiale.

L'invention ne saurait être confondue avec celle qui est divulguée dans le brevet FR 2 666 262 cité plus haut. En effet, elle en diffère notamment par :
- la compression et le soudage des fibres et du métal d'apport dans la même opération,
- un rapport épaisseur/longueur réduit de l'obturateur intérieur qui se déforme ainsi à la façon d'une membrane, cet obturateur disparaissant lors de l'usinage de la pièce finie,
- l'introduction de la virole à expansion radiale coulissant entre les parois latérales de la rainure,
- l'introduction dans une rainure annulaire plus profonde de couches de fibre et de métal d'apport non compressées et ne constituant donc pas dans cet état un matériau composite,
- l'utilisation du métal d'apport pour supporter les fibres, ce qui évite l'introduction d'un support supplémentaire occupant nécessairement un volume et permet ainsi d'augmenter la densité de fibres.

### BREVE DESCRIPTION DES FIGURES

L'invention sera mieux comprise au vu d'un exemple détaillé de réalisation ainsi que des figures annexées.

La figure 1 représente une demi-vue en coupe de l'ensemble avant les opérations de compression et de soudage.

La figure 2 représente une vue en coupe d'une préforme de fibres et de métal d'apport.

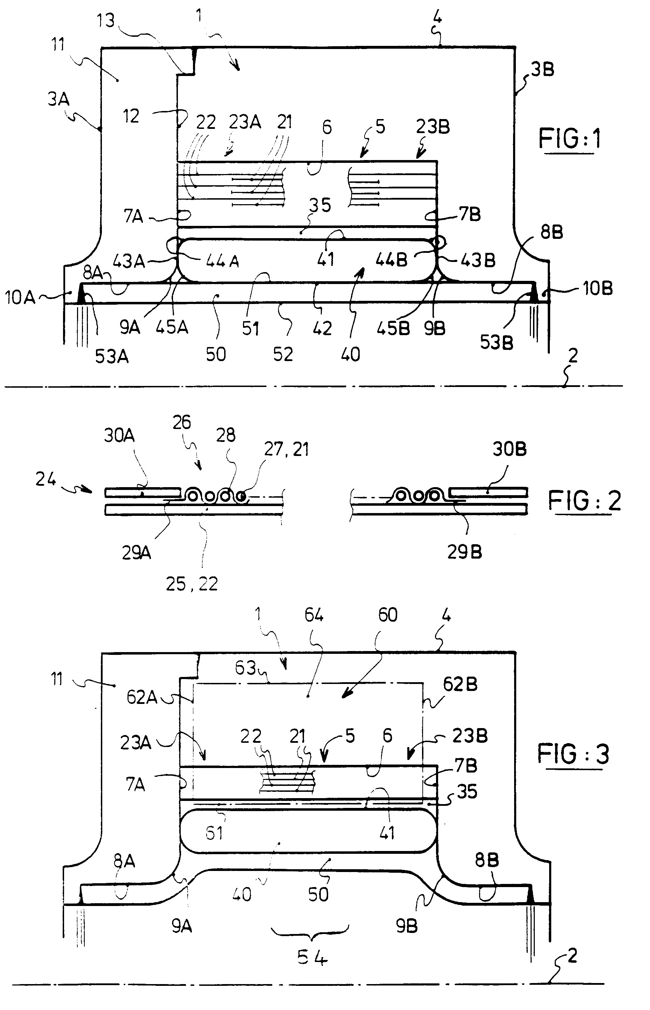

Enfin, la figure 3 représente une demi-vue en coupe de l'ensemble après les opérations de compactage et de soudage, ainsi que la position de la pièce finie dans l'ensemble.

### DESCRIPTION DETAILLEE

On se reportera en premier lieu à la figure 1. L'ébauche circulaire 1 a une forme générale de révolution autour de l'axe géométrique 2. Cette ébauche est délimitée latéralement par deux surfaces radiales 3A et 3B, et extérieurement par la surface cylindrique 4. L'ébauche 1 comporte aussi une rainure circulaire 5 centrée sur l'axe 2 et dont l'ouverture est tournée vers l'axe 2. La rainure 5 a un profil en U délimité radialement par un fond 6 ayant la forme d'une surface cylindrique d'axe 2 et axialement par les deux parois annulaires 7A et 7B planes et radiales à l'axe 2. Ces surfaces 7A et 7B se raccordent respectivement aux surfaces cylindriques 8A et 8B par des arrondis 9A et 9B de rayon suffisants. Ces surfaces 8A et 8B délimitent ainsi intérieurement l'ébauche 1, et elles se raccordent respectivement aux surfaces latérales de l'ébauche 3A et 3B par les épaulements 10A et 10B qui délimitent ainsi vers l'extérieur lesdites surfaces (8A) et (8B). Afin de permettre l'accès à l'intégralité de la rainure 5 par un mouvement unique de translation, une flanc 11 de l'ébauche 1 est amovible. Dans un mode de réalisation préféré mais non obligatoire, le flanc 11 est en contact avec le reste de l'ébauche 1 par une surface de contact 12 dans le prolongement de la surface 7A ou 7B délimitant latéralement la rainure 5. Ce flanc 11 est centré par rapport au reste de l'ébauche grâce à un décrochement 13 de la surface de contact 12, ledit décrochement étant concentrique à l'axe 2.

On dispose à l'intérieur de la rainure 5 des couches de fibres 21 et des feuilles de métal d'apport 22 alternativement de sorte que chaque couche de fibres 21 est séparée des couches voisines par une feuille 22 de métal d'apport. Chaque fibre 21 a donc la forme d'un cercle centré sur l'axe géométrique 2 et situé dans un plan radial à cet axe. Chaque fibre 21 a aussi la forme d'un cercle coupé, ce qui signifie en d'autres termes que cette fibre 21 a une longueur égale ou un peu inférieure à la circonférence du cercle qu'elle forme avant la compression. Au contraire des feuilles de métal d'apport 22, les fibres 21 ne sont pas disposées sur toute la largeur de la rainure 5, et on trouvera ainsi de part et d'autre des couches de fibre 21 des zones non fibreuses 23A et 23B qui s'étendent jusqu'aux surfaces latérales 7A et 7B de la rainure.

On se reportera maintenant à la figure 2. Dans un mode de réalisation préféré, les couches de fibre 21 et de métal d'apport 22 sont constituées en préformes 24 réalisées de la façon suivante : un support 25 constituant le métal d'apport 22 est pris dans un ruban en feuille de métal d'apport 22 dont la largeur est égale ou un peu inférieure à celle de la rainure 5. Sur une face de ce ruban de métal, on applique un ruban de tissu 26 dont le fil de chaîne 27 est constitué par les fibres de renfort 21 et le fil de trame 28 par, de préférence, de petits rubans réalisés dans le matériau du support 25. Les fils de trame 28 passent alternativement dessus et dessous les fils de chaine 27 et en assurent la cohésion. Les extrémités des fils de trame 28 dépassent des bords du tissu 26 et constituent des prolongements 29A et 29B qui sont pris entre le support 25 et deux rubans latéraux 30A et 30B solidaires du support 25. Ces rubans latéraux 30A et 30B sont de préférence dans le même matériau que le support 25 et maintenus sur lui par exemple par des points de soudure ou autre procédé de soudage par résistance. Les rubans 30A et 30B s'étendent depuis les bords du tissu 26 jusqu'aux bords du support 25, de part et d'autre du tissu 26.

On comprend ainsi que ces rubans 30A et 30B permettent à la fois de maintenir sans liant organique les fibres 21 sur les feuilles de métal d'apport 22 et de combler de métal d'apport les espaces résultants de l'absence de fibres dans les zones 23A et 23B.

On coupera ensuite dans le ruban ainsi assemblé des tronçons dont la longueur est égale à la circonférence de chaque couche de fibre 21 et de métal d'apport 22 pour constituer les préformes. Ces préformes 24 sont ensuite disposées dans la rainure 5 en répartissant uniformément les lignes de coupure des préformes sur toute la longueur de la circonférence de cette rainure 5, les lignes de coupure de deux couches consécutives devant être approximativement diamétralement opposées. Par exemple, dans le cas de 36 couches, les lignes de coupure seront orientées selon la série O° 190° 20° 210° 40° etc..., soit un décalage unique de 190° entre deux couches consécutives et de 20° entre deux couches séparées par une troisième.

On se reportera de nouveau à la figure 1. Une surépaisseur 35 de métal d'apport est disposée à l'intérieur et contre le couches de fibre 21 et de métal d'apport 22 en direction de l'axe 2. Cette surépaisseur 35 a la forme d'une paroi cylindrique d'axe 2 dont la hauteur est égale ou un peu inférieure à la largeur de la rainure 5. Cette couche 35 sera avantageusement constituée en disposant dans la rainure 5 des feuilles de métal d'apport sans couches de fibres 21.

Une virole à expansion radiale 40 est disposée à l'entrée de la rainure 5. Cette virole 40 est délimitée extérieurement par une surface cylindrique convexe de révolution 41 qui arrive au contact de la surépaisseur 35, et intérieurement par une surface cylindrique concave de révolution 42 dont le diamètre est égal à celui des surfaces 8A et 8B et qui se trouve donc dans le prolongement de ces surfaces 8A et 8B. La virole 40 est aussi délimitée latéralement par deux surfaces annulaires 43 A et 43B, planes et radiales à l'axe 2, qui coulissent radialement avec un jeu suffisant entre les surfaces latérales 7A et 7B de la rainure lorsque cette couronne est en expansion. Les surfaces latérales 43A et 43B se raccordent à la surface extérieure 41 respectivement par les arrondis 44A et 44B, ces surfaces 43A et 43B se raccordant aussi à la surface intérieure 42 par les arrondis 45A et 45B.

Enfin, la rainure 5 est fermée par un obturateur 50 qui se présente comme une paroi mince en forme de cylindre de révolution comportant une surface extérieure 51 s'appuyant contre les portées intérieures 8A et 8B de l'ébauche 1, une paroi intérieure 52 ainsi que deux extrémités latérales 53A et 53B arrivant contre les épaulements 10A et 10B.

L'assemblage se fait préférentiellement de la façon suivante;
- disposition dans la rainure 5 contre le fond 6 de quelques feuilles de métal d'apport coupées à la longueur,
- disposition dans la rainure 5 des préformes 24 de fibre 21 et de métal d'apport 22,
- introduction de la virole 40 dans la rainure 5,
- introduction, entre la virole 40 et les couches de fibre 21 et de métal d'apport 22, de nouvelles couches de métal d'apport pour constituer la surépaisseur 35,
- introduction de l'obturateur 50 jusqu'à ce que son extrémité 53B arrive contre l'épaulement 10B,
- mise en place du flanc 11.

Pour faciliter l'introduction des dernières feuilles, on prévoira entre les surfaces 41 et 6 un espace égal à la somme des épaisseurs des couches de fibres 21, des couches de métal d'apport 22 et de la surépaisseur 35 majorées de 3 à 5%.

L'ensemble est ensuite placé dans une enceinte sous vide, et on procédera au soudage par faisceau d'électrons du flanc 11 avec le reste de l'ébauche 1, sur la ligne d'intersection entre les surfaces de contact 12 et la surface extérieure 4 de l'ébauche. On procédera aussi au soudage des extrémités 53A et 53B de l'obturateur 50 respectivement avec les épaulements 10A et 10B de l'ébauche 1. L'ensemble forme ainsi un conteneur étanche dont l'intérieur de la rainure 5 est vide d'air, cet ensemble étant facile à manutentionner.

Cet ensemble ainsi obtenu est ensuite mis en autoclave et monté progressivement aux conditions de température et de pression nécessaires au forgeage supersplastique des couches de métal d'apport 22.
Sous l'effet combiné de l'augmentation de plasticité de la matière avec la montée en température, et de la pression de l'autoclave s'exerçant radialement sur la surface interne 52 de l'obturateur 50, celui-ci se creuse dans les espaces présents entre les arrondis 9A et 45A, et les arrondis 9B et 45B, et vient s'appliquer sur ces arrondis.

Afin de ne pas déchirer l'obturateur 50, le rayon des arrondis 45A et 45B devrait être au moins égal à l'épaisseur de l'obturateur 50.

La pression de l'autoclave se transmet par l'intermédiaire de l'obturateur 50 sur la surface intérieure 42 de la virole 40. Sous l'effet de cette pression, la virole 40 se dilate diamétralement, coulisse entre les parois 7A et 7B de la rainure 5 et comprime contre le fond 6 de la rainure 5 les différentes couches de fibre 21, de métal d'apport 22 ainsi que les feuilles de métal d'apport constituant la surépaisseur 35. Afin de privilégier une déformation radiale vers l'extérieur, les parois de l'ébauche 1 entourant la rainure 5 sont épaisses et massives alors que l'obturateur 50 est mince et facilement déformable à la façon d'une membrane. En pratique, l'épaisseur de l'ébauche 1 prise entre sa surface extérieure 4 et le fond 6 de la rainure 5 ne devrait pas être inférieur à 5 fois l'épaisseur de l'obturateur 50.

Cette compression provoque la pénétration du métal d'apport entre les fibres par forgeage superplastique, le comblement de tous les vides, le soudage du métal d'apport enrobant les fibres sur les parois 6, 7A et 7B de la rainure 5, ainsi qu'une réduction importante du volume apparent des fibres et du métal d'apport. Le diamètre de la virole 40 augmente en conséquence sous l'effet de la pression de l'autoclave s'exerçant par l'intérieur par l'intermédiaire de l'obturateur 50. Cet obturateur 50 se déforme et pénètre dans la rainure 5 tout en conservant l'étanchéité.

Il est important que la virole 40 puisse rester cylindrique pendant la compression afin d'assurer une compression uniforme des fibres 21 et du métal d'apport 22, son expansion ayant tendance à être plus importante au milieu plutôt qu'à proximité des surfaces 7A et 7B bordant la rainure 5 du fait de la raideur résiduelle de l'obturateur 50. A cette fin, on préférera un rapport entre l'épaisseur de la virole et sa longueur qui ne soit pas inférieur à O,15, cette épaisseur étant prise entre les surfaces 41 et 42, et la longueur entre les surfaces 43A et 43B de la virole 40. On choisira aussi un matériau dont la limite d'allongement élastique et la limite d'allongement avant rupture soient respectivement inférieure et supérieure à l'allongement effectif de la virole pendant la compression à la température de forgeage superplastique des couches de métal d'apport 22.

La virole 40 sera aussi avantageusement recouverte d'un enduit passivant, par exemple de l'alumine Al₂O₃ ou de l'yttrine Y₂0₃ afin qu'elle ne se soude pas aux autres pièces.

La virole 40 peut être omise losque le rapport épaisseur/largeur de la zone fibreuse est petit.

On se reportera maintenant à la figure 3. Après la compression et le soudage des couches de fibres 21 et de métal d'apport 22, le diamètre de la virole 40 a sensiblement augmenté, cette virole ayant en même temps coulissé par ses surfaces 43A et 43B entre les surfaces 7A et 7B de la rainure 5.

L'obturateur 50 reste plaqué contre la virole 40 et a roulé sur les arrondis 9A et 9B. L'obturateur 50 s'est déformé sans se déchirer à la façon d'une membrane. Pour se faire, le rapport entre son épaisseur et la largeur de la rainure 5 devrait être dans la fourchette comprise entre O,O5 et O,15, et le rayon des arrondis 9A et 9B devrait s'approcher du déplacement radial de la partie médiane 54 de l'obturateur et être au moins égal aux 2/3 de ce déplacement. Par ailleurs, la longueur des portées 8A et 8B hors arrondis ne devrait pas être inférieure à 2 fois l'épaisseur de l'obturateur, afin de réduire la contrainte exercée sur les soudures.

Dans cet exemple, la pièce à usiner 60 a une section rectangulaire comportant une surface intérieure concave 61 en forme de cylindre de révolution d'axe 2, deux surfaces latérales 62A et 62B annulaires, planes et radiales à l'axe 2, et une surface extérieure convexe 63 en forme de cylindre de révolution d'axe 2.

La surface intérieure 61 passe dans la surépaisseur 35 afin que les fibres de renfort 21 soient en retrait de cette surface 61. Cette surépaisseur 35 aura en conséquence une épaisseur supérieure à l'épaisseur de métal devant rester entre les fibres 21 et la surface intérieure 61 de la pièce usinée 60.

Le diamètre du fond 6 de la rainure 5 sera très simplement déduit du diamètre moyen de la surépaisseur 30 à obtenir et du volume net de fibres 21 et de métal d'apport 22 introduit dans cette rainure. On préférera disposer les zones non fibreuses 23A et 23B à l'emplacement des surfaces latérales 62A et 62B de la pièce usinée 60, ce qui conduit à donner à la nappe de fibres 21 une largeur qui soit inférieure à la largeur de la pièce 61 prise entre les faces 62A et 62B, alors que la largeur de la rainure 5 prise entre les surfaces 7A et 7B est supérieure à la largeur de cette pièce 61. Avec cette disposition plus performante, mais non obligatoire, la pièce 60 ne comportera pas de fibres 21 sur ses flancs 62A et 62B, et ne comportera pas non plus les zones de soudure des flancs 7A et 7B avec le métal d'apport 22.
La partie périphérique 64 de la pièce 60 extérieure à la zone fibreuse est prise dans l'ébauche 1.

Les organes fonctionnels de la pièce tels des aubes usinées dans la masse, des rainures pour tenir des aubes rapportées, des brides de liaison avec d'autres étages de rotors etc... peuvent être usinées dans les parties de la pièce 60 ne comportant pas de fibres 21.

On remarquera qu'une section rectangulaire est donnée à la pièce 60 pour simplifier l'exposé, le présent procédé permettant évidemment une grande diversité de formes.

L'ébauche 1, le métal d'apport, la surépaisseur 35 et l'obturateur 50 peuvent être réalisés en alliages de titane tels le TA6V ou le TA6ZR4DE, avec une virole 40 en acier doux tel le Z1OCNT18 et des fibres de carbure de silicium, carbure de bore ou de tout autre matériau a haute résistance supportant les températures atteintes.

A l'exception de la virole, un seul métal est utilisé afin de ne pas contaminer les chutes après usinage et permettre ainsi le recyclage, ce qui est appréciable dans le cas des alliages de titane utilisés en aéronautique. Des métaux différents, tels par exemple des composés intermétalliques à base de titane et d'aluminium ou des superalliages à base nickel, sont aussi utilisables à condition évidemment d'être soudables entre eux aux mêmes conditions de température et de pression.

Le forgeage superplastique et le soudage sont réalisables avec les alliages ci-dessus en autoclave à 95°C sous une pression de 1100 bars. Ces alliages sont normalement forgeables à 700 bars, mais la surpression à 1100 bars est requise pour tenir compte de la résistance de la virole 40.

## Revendications

1. Procédé d'obtention d'une pièce circulaire métallique renforcée par des fibres, ladite pièce étant évidée en son centre et lesdites fibres étant disposées dans le voisinage de l'évidement, ledit procédé comportant les opérations suivantes:
- réalisation d'une ébauche circulaire (1) comportant une rainure circulaire (5) en U dont l'ouverture est tournée du côté de l'axe géométrique (2) de la pièce,
- introduction dans ladite rainure (5) alternativement de couches concentriques de fibres (21) et de métal d'apport (22) non comprimées,
- recouvrement de la rainure (5) par un obturateur (50) déformable,
- mise sous vide et fermeture hermétique de cette rainure (5),
- compression des couches de fibres (21) avec les couches de métal d'apport (22) et soudage de la masse de fibres (21) et de métal d'apport (22) à l'ébauche (1) en une seule opération réalisée en autoclave à la température de forgeage superplastique des couches de métal d'apport (22) sous une pression au moins égale à la pression de forgeage superplastique de ces mêmes couches (22).
- usinage de la pièce.

2. Procédé conforme à la revendication 1 caractérisé en ce qu'une virole (40) à expansion radiale est disposée à l'entrée de la rainure (5).

3. Procédé conforme à la revendication 2 caractérisé en ce que la virole (40) à expansion radiale est réalisée en un matériau ayant, à la température de forgeage superplastique du métal d'apport (22), une limite d'allongement élastique et une limite d'allongement avant rupture respectivement inférieure et supérieure à l'allongement effectif de ce matériau pendant la compression et le soudage.

4. Procédé conforme à la revendication 2 ou 3 caractérisé en ce que la virole (40) coulisse radialement pendant son expansion entre les parois latérales (7A) et (7B) de la rainure (5).

5. Procédé conforme à l'une quelconque des revendications 1 à 4 caractérisé en ce que l'ébauche (1) comporte un flanc amovible (11), pour faciliter l'introduction des fibres (21) et du métal d'apport (22) dans la rainure (5).

6. Procédé conforme à l'une quelconque des revendications 1 à 5 caractérisé en ce que la mise sous vide et la fermeture hermétique de la rainure (5) sont réalisées simultanément par mise en place dans une enceinte sous vide et soudage par faisceau d'électrons.

7. Procédé conforme à l'une quelconque des revendications 1 à 6 caractérisé en ce que l'épaisseur de l'ébauche 1 prise entre le fond (6) de la rainure (5) et la surface extérieure (4) délimitant radialement ladite ébauche est au moins égale à 5 fois l'épaisseur de l'obturateur (50), pour imposer aux couches de fibres (21) et de métal d'apport (22) une déformation radiale centrifuge.

8. Procédé conforme à l'une quelconque des revendications 1 à 7, caractérisé en ce que les fibres (21) ont chacune une longueur égale ou un peu inférieure à la circonférence du cercle qu'elles forment avant la compression.

9. Procédé conforme à l'une quelconque des revendications 1 à 8, caractérisé en ce que les zones non fibreuses (23A) et (23B) sont disposées à l'emplacement des surfaces latérales 62A et 62B de la pièce usinée 60.

10. Procédé conforme à la revendication 9, caractérisé en ce que les espaces résultant de l'absence de fibres (21) dans les zones (23A) et (23B) sont comblés par des rubans latéraux (27A) et (27B) de métal d'apport.

11. Procédé conforme à l'une quelconque des revendications 1 à 10, caractérisé en ce que les couches de fibre (21) et de métal d'apport (22) sont constituées en préformes (24) coupées à la longueur dans un ruban comportant un support (25) en feuille de métal d'apport (22) et un tissu (26) appliqué sur ledit support (25), les fils de chaine (27) dudit tissu étant les fibres de renfort (21).

12. Procédé conforme à la revendication 11, caractérisé en ce que des rubans latéraux (30A) et (30B) en métal d'apport sont appliqués aussi sur le support (25) de part et d'autre du tissu (26), lesdits rubans latéraux (30A) et (30B) étant solidaires dudit support (25).

13. Procédé conforme à la revendication 11 ou 12, caractérisé en ce que les fils de trame (28) du tissu (26) comportent des prolongements (29A) et (29B) de part et d'autre dudit tissu (26), et en ce que lesdits prolongements (29A) et (29B) sont pris entre le support (25) et respectivement entre les rubans (30A) et (30B).

14. Procédé conforme à la revendication (12) ou (13) caractérisé en ce que les rubans (30A) et (30B) sont soudés par résistance au support (25), par exemple par des points de soudure.

15. Procédé conforme à l'une quelconque des revendications 11 à 14 caractérisé en ce que les lignes de coupure des préformes (24) sont uniformément réparties le long de la rainure (5).

16. Procédé conforme à l'une quelconque des revendications 1 à 15, caractérisé en ce qu'une surépaisseur (35) de métal d'apport est disposée à l'intérieur des couches de fibre (21) et de métal d'apport (22), cette surépaisseur (35) étant supérieure à l'épaisseur de métal devant rester entre les fibres (21) et la surface intérieure (61) de la pièce usinée (60).

17. Procédé conforme à l'une quelconque des revendications 1 à 15, caractérisé en ce que l'obturateur (50) s'appuie contre deux portées (8A) et (8B) à l'intérieur de l'ébauche (1), et en ce que lesdites portées (8A) et (8B) ont une largeur au moins égale à deux fois l'épaisseur de l'obturateur (50).

18. Procédé conforme à la revendication 17, caractérisé en ce que les portées (8A) et (8B) sont limitées chacune à l'extérieur par un épaulement (10A) et (10B), et en ce que les extrémités (53A) et (53B) de l'obturateur (50) sont soudées à ces épaulements (10A) et (10b).

19. Procédé conforme à l'une quelconque des revendications 16 à 18, caractérisé en ce que les portées (8A) et (8B) se raccordent respectivement aux parois latérales (7A) et (7B) de la rainure par des arrondis (9A) et (9B) dont le rayon est au moins égal aux 2/3 du déplacement radial de la partie médiane (54) de l'obturateur (50).

20. Procédé conforme à l'une quelconque des revendications 2 à 19, caractérisé en ce que la surface intérieure (42) de la virole (40) se raccorde aux surfaces latérales (43A) et (43B) de cette virole par des arrondis (45A) et (45B) dont le rayon est au moins égal à l'épaisseur de l'obturateur (50).

## Claims

1. Process for obtaining a circular fibre-reinforced metallic component, the said component being cavitied at its centre and the said fibres being arranged in the region of the cavity, the said process including the following operations:
- producing a circular blank (1) having a U-shaped circular slot (5), the opening of which faces the geometrical axis (2) of the component;
- inserting, into the said slot (5), alternately uncompressed concentric layers of fibres (21) and uncompressed concentric layers of filler metal (22);
- covering the slot (5) with a deformable closure-piece (50);
- evacuating and hermetically sealing this slot (5);
- compressing the layers of fibres (21) with the layers of filler metal (22) and welding the mass of fibres (21) and of filler metal (22) to the blank (1) in a single operation carried out in an autoclave at the temperature for superplastically forging the layers of filler metal (22) under a pressure at least equal to the pressure for superplastically forging these same layers (22);
- machining the component.

2. Process according to Claim 1, characterized in that a radially expanding ring (40) is placed in the entrance of the slot (5).

3. Process according to Claim 2, characterized in that the radially expanding ring (40) is made of a material having, at the superplastic forging temperature of the filler metal (22), an elastic elongation limit and an elongation limit before break which are respectively less than and greater than the effective elongation of this material during the compression and the welding.

4. Process according to Claim 2 or 3, characterized in that the ring (40), during its expansion, slides radially between the side walls (7A) and (7B) of the slot (5).

5. Process according to any one of Claims 1 to 4, characterized in that the blank (1) has a removable side (11) in order to make it easier to insert the fibres (21) and the filler metal (22) into the slot (5).

6. Process according to any one of Claims 1 to 5, characterized in that the evacuation and hermetic sealing of the slot (5) are carried out simultaneously by putting the assembly in a vacuum chamber and welding it using an electron beam.

7. Process according to any one of Claims 1 to 6, characterized in that the thickness of the blank (1), taken between the bottom (6) of the slot (5) and the external surface (4) radially delimiting the said blank, is at least equal to 5 times the thickness of the closure-piece (50) in order to impose on the layers of fibres (21) and the layers of filler metal (22) a centrifugal radial deformation.

8. Process according to any one of Claims 1 to 7, characterized in that the fibres (21) each have a length equal to or slightly less than the circumference of the circle which they form before the compression.

9. Process according to any one of Claims 1 to 8, characterized in that the non-fibrous regions (23A) and (23B) are arranged at the location of the side surfaces (62A) and (62B) of the machined component (60).

10. Process according to Claim 9, characterized in that the spaces resulting from the absence of fibres (21) in the regions (23A) and (23B) are filled with side tapes (27A) and (27B) of filler metal.

11. Process according to any one of Claims 1 to 10, characterized in that the layers of fibre (21) and the layers of filler metal (22) consist of preforms (24) cut to length from a tape having a support (25) made of a foil of filler metal (22) and a woven fabric (26) applied against the said support (25), the warp yarns (27) of the said fabric being the reinforcing fibres (21).

12. Process according to Claim 11, characterized in that the side tapes (30A) and (30B) of filler metal are also applied against the support (25) on each side of the fabric (26), the said side tapes (30A) and (30B) being fastened to the said support (25).

13. Process according to Claim 11 or 12, characterized in that the weft yarns (28) of the fabric (26) have extensions (29A) and (29B) on each side of the said fabric (26) and in that the said extensions (29A) and (29B) are held between the support (25) and respectively the tapes (30A) and (30B).

14. Process according to Claim 12 or 13, characterized in that the tapes (30A) and (30B) are resistance-welded to the support (25), for example by means of spot welds.

15. Process according to any one of Claims 11 to 14, characterized in that the lines of cutting of the preforms (24) are uniformly distributed along the slot (5).

16. Process according to any one of Claims 1 to 15, characterized in that an additional thickness (35) of filler metal is placed inside the layers of fibre (21) and the layers of filler metal (22), this additional thickness (35) being greater than the thickness of metal which has to remain between the fibres (21) and the internal surface (61) of the machined component (60).

17. Process according to any one of Claims 1 to 15, characterized in that the closure-piece (50) presses against two bearing surfaces (8A) and (8B) inside the blank (1) and in that the said bearing surfaces (8A) and (8B) have a width at least equal to twice the thickness of the closure-piece (50).

18. Process according to Claim 17, characterized in that the bearing surfaces (8A) and (8B) are each bounded on the outside by a shoulder (10A) and (10B) and in that the ends (53A) and (53B) of the closure-piece (50) are welded to these shoulders (10A) and (10B).

19. Process according to any one of Claims 16 to 18, characterized in that the bearing surfaces (8A) and (8B) are respectively connected to the side walls (7A) and (7B) of the slot by rounded parts (9A) and (9B), the radius of which is at least equal to 2/3 of the radial displacement of the central part (54) of the closure-piece (50).

20. Process according to any one of Claims 2 to 19, characterized in that the internal surface (42) of the ring (40) is connected to the side surfaces (43A) and (43B) of this ring by rounded parts (45A) and (45B), the radius of which is at least equal to the thickness of the closure-piece (50).

## Patentansprüche

1. Verfahren zur Herstellung eines kreisförmigen faserverstärkten metallischen Teils, wobei dieses Teil in seinem Zentrum einen Durchbruch aufweist und die Fasern in der Nähe des Durchbruchs angeordnet sind,
mit folgenden Verfahrensschritten:
- Herstellen eines kreisförmigen Rohlings (1) mit einer kreisförmigen Nut (5) mit U-förmigem Profil, deren Öffnung der geometrischen Achse (2) des Teils zugewandt ist,
- abwechselndes Einbringen von nicht komprimierten konzentrischen Schichten (21) aus Fasern und Schichten aus Auftragsmetall (22) in die Nut (5),
- Abdecken der Nut (5) mit einem verformbaren Verschluß (50),
- Evakuieren und hermetisches Verschließen der Nut (5),
- Komprimieren der Schichten aus Fasern (21) zusammen mit den Schichten aus Auftragsmetall (22) und Verschweißen der Masse aus Fasern (21) und Auftragsmetall (22) in dem Rohling (1) in einem einzigen Arbeitsgang, der im Autoklaven bei der Temperatur für superplastisches Warmumformen der Schichten aus Auftragsmetall (22) unter einem Druck ausgeführt wird, der zumindest so groß ist wie der Druck für superplastisches Warmumformen dieser Schichten (22),
- maschinelles Bearbeiten des Teils.

2. Verfahren nach Anspruch 1, dadurch gekennzeichnet, daß am Eingang der Nut (5) ein radial dehnbarer Ring (40) angeordnet wird.

3. Verfahren nach Anspruch 2, dadurch gekennzeichnet, daß der radial ausdehnbare Ring (40) aus einem Material hergestellt wird, das bei der Temperatur für superplastisches Warmumformen des Auftragsmetalls (22) eine Grenze der elastischen Dehnung und eine Grenze der Bruchdehnung besitzt, die kleiner bzw. größer sind als die effektive Dehnung des Materials während des Komprimierens und des Verschweißens.

4. Verfahren nach Anspruch 2 oder 3, dadurch gekennzeichnet, daß der Ring (40) während seiner Dehnung zwischen den Seitenwänden (7A und 7B) der Nut (5) gleitet.

5. Verfahren nach einem der Ansprüche 1 bis 4, dadurch gekennzeichnet, daß der Rohling (1) eine abnehmbare Seite (11) besitzt, um das Einbringen der Fasern (21) und des Auftragsmetalls (22) in die Nut (5) zu erleichtern.

6. Verfahren nach einem der Ansprüche 1 bis 5, dadurch gekennzeichnet, daß das Evakuieren und hermetische Verschließen der Nut (5) durch Anordnen in einer Vakuumkammer und Elektronenstrahlschweißen gleichzeitig ausgeführt werden.

7. Verfahren nach einem der Ansprüche 1 bis 6, dadurch gekennzeichnet, daß die Dickenabmessung des Rohlings (1) zwischen dem Boden der Nut (5) und der den Rohling in radialer Richtung begrenzenden Außenfläche (4) wenigstens fünfmal so groß ist wie die Wandstärke des Verschlusses (50), um die Schichten aus Fasern (21) und Auftragsmetall (22) einer radialen zentrifugalen Verformung zu unterziehen.

8. Verfahren nach einem der Ansprüche 1 bis 7, dadurch gekennzeichnet, daß die Fasern (21) jeweils eine Länge haben, die gleich oder geringfügig kleiner ist als der Umfang des Kreises, den sie vor dem Komprimieren bilden.

9. Verfahren nach einem der Ansprüche 1 bis 8, dadurch gekennzeichnet, daß die faserfreien Zonen (23A und 23B) im Bereich der Stelle der Seitenflächen (62A und 62B) des bearbeiteten Teils (60) angeordnet sind.

10. Verfahren nach Anspruch 9, dadurch gekennzeichnet, daß die Zwischenräume, die sich durch den Wegfall von Fasern (21) in den genannten Zonen (23A und 23B) ergeben, mit seitlichen Bändern (27A und 27B) aus Auftragsmetall ausgefüllt werden.

11. Verfahren nach einem der Ansprüche 1 bis 10, dadurch gekennzeichnet, daß die Schichten aus Fasern (21) und Auftragsmetall (22) aus Vorformen (24) bestehen, die in einem Band auf Länge geschnitten werden, das aus einem Träger (25) aus einer Folie aus Auftragsmetall (22) einem auf diesem Träger (25) aufgebrachten Gewebe (26) besteht, wobei die Kettfäden (17) des Gewebes die Verstärkungsfasern (21) darstellen.

12. Verfahren nach Anspruch 11, dadurch gekennzeichnet, daß die seitlichen Bänder (30A und 30B) aus Auftragsmetall zu beiden Seiten des Gewebes (26) auf den Träger (25) aufgebracht werden, wobei diese seitlichen Bänder (30A und 30B) mit dem Träger (25) fest verbunden werden.

13. Verfahren nach Anspruch 11 oder 12, dadurch gekennzeichnet, daß die Schußfäden (28) des Gewebes (26) zu beiden Seiten des Gewebes (26) Verlängerungen (29A und 29B) aufweisen und daß diese Verlängerungen (29A und 29B) zwischen dem Träger (25) und den Bändern (30A und 30B) bzw. zwischen den Bändern (30A und 30B) gefaßt werden.

14. Verfahren nach Anspruch 12 oder 13, dadurch gekennzeichnet, daß die Bänder (30A und 30B) durch Widerstandsschweißen, z. B. durch Schweißpunkte, mit dem Träger (25) verbunden werden.

15. Verfahren nach einem der Ansprüche 11 bis 14, dadurch gekennzeichnet, daß die Schnittlinien der Vorformen (24) über die Länge der Nut (5) gleichförmig verteilt werden.

16. Verfahren nach einem der Ansprüche 1 bis 15, dadurch gekennzeichnet, daß im Innern der Schichten aus Fasern (21) und Auftragsmetall (22) eine Dickenzugabe (35) an Auftragsmetall angeordnet wird, die größer ist als die Wandstärke des Metalls, die zwischen den Fasern (21) und der Innenfläche (61) des bearbeiteten Teils (60) verbleiben soll.

17. Verfahren nach einem der Ansprüche 1 bis 15, dadurch gekennzeichnet, daß der Verschluß (50) sich gegen zwei Auflageflächen (8A und 8B) im Innern des Rohlings (1) abstützt und daß die Breite dieser Auflageflächen (8A und 8B) wenigsten zweimal so groß ist wie die Dickenabmessung des Verschlusses (50).

18. Verfahren nach Anspruch 17, dadurch gekennzeichnet, daß die Auflageflächen (8A und 8B) außen jeweils von einer Schulter (10A und 10B) begrenzt werden und daß die Enden (53A und 53B) des Verschlusses (50) an diese Schultern (10A und 10B) angeschweißt sind.

19. Verfahren nach einem der Ansprüche 16 bis 18, dadurch gekennzeichnet, daß die Auflageflächen (8A und 8B) jeweils über Abrundungen (9A und 9B) in die Seitenwände (7A und 7B) der Nut übergehen, wobei der Krümmungsradius dieser Abrundungen wenigstens 2/3 der radialen Verschiebung des mittleren Teils (54) des Verschlusses (50) entspricht.

20. Verfahren nach einem der Ansprüche 2 bis 19, dadurch gekennzeichnet, daß die Innenfläche (42) des Rings (40) über Abrundungen (45A und 45B) in die Seitenwände (7A und 7B) des Rings übergehen, wobei der Krümmungsradius dieser Abrundungen wenigstens der Wandstärke des Verschlusses (50) entspricht,
